(19) Europäisches Patentamt / European Patent Office / Office européen des brevets

(11) **EP 1 074 843 B1**

(12) **EUROPÄISCHE PATENTSCHRIFT**

(45) Veröffentlichungstag und Bekanntmachung des Hinweises auf die Patenterteilung:
**13.02.2008 Patentblatt 2008/07**

(51) Int Cl.:
*G01P 3/489* (2006.01)        *G01D 5/46* (2006.01)
*G08C 19/00* (2006.01)

(21) Anmeldenummer: **00114005.2**

(22) Anmeldetag: **04.07.2000**

(54) **System zur Erzeugung eines Signals zur Übertragung von Informationen**

Information transmission signal generating system

Système de génération d'un signal pour la transmission d' informations

(84) Benannte Vertragsstaaten:
**DE FR GB IT**

(30) Priorität: **06.08.1999 DE 19937155**

(43) Veröffentlichungstag der Anmeldung:
**07.02.2001 Patentblatt 2001/06**

(73) Patentinhaber: **ROBERT BOSCH GMBH**
**70442 Stuttgart (DE)**

(72) Erfinder: **Schneider, Thomas**
**71706 Markgroeningen (DE)**

(56) Entgegenhaltungen:
**WO-A-88/09026          DE-A- 4 233 549**
**DE-A- 19 634 715        DE-A- 19 650 935**
**DE-A- 19 838 433**

**Beschreibung**

Stand der Technik

Die Erfindung betrifft ein System zur Erzeugung eines Signals mit den Merkmalen des Anspruchs 1.

Zur Steuerung beziehungsweise Regelung der Vorgänge in Kraftfahrzeugen kommen immer mehr Sensoren zum Einsatz. Dies bedeutet jedoch, daß immer mehr Sensorsignale unabhängig voneinander zu den Steuerungs- bzw. Regelungseinheiten übertragen werden müssen. Die Einzelsignale müssen dabei verschiedenen Anforderungen entsprechen. Werden die Einzelsignale zu einem "Summensignal" zusammengefaßt, so müssen die Einzelanforderungen erhalten bleiben.

Zur Regelung bzw. Steuerung der Bremskraft, Antriebskraft und/oder der Fahrdynamik eines Kraftfahrzeugs ist es bekannt, die Drehzahlen der Fahrzeugräder zu messen. Hierzu werden im Stand der Technik vielerlei Methoden (bspw. Hall- oder magnetoresistive Sensoren) ausgeführt. Darüber hinaus ist es bekannt, die Abnutzung des Bremsbelages einer Fahrzeugbremse zu ermitteln, indem beispielsweise in einer gewissen Tiefe der Bremsbeläge Kontaktstifte eingelassen sind, die einen Kontakt auslösen, wenn der Bremsbelag bis zu dieser Tiefe abgenutzt ist.

So zeigt beispielsweise der Artikel "Integrierte Hall-Effekt-Sensoren zur Positions- und Drehzahlerkennung", elektronik industrie 7-1995, Seiten 29 bis 31 aktive Sensoren zum Einsatz im Kraftfahrzeug für Antiblockier-Antriebsschlupf-, Motor- und Getriebesteuerungs- bzw. -regelungssysteme. Solche Sensoren liefern in einer Zweidrahtbeschaltung zwei Strompegel, die in einem entsprechenden Steuergerät durch einen Meßwiderstand in zwei Spannungspegel umgesetzt werden.

Neben den erwähnten Hall-Effekt-Sensoren ist auch der Einsatz von magnetoresistiven Sensoren zur Drehzahlerfassung beispielsweise aus dem Artikel "Neue, alternative Lösungen für Drehzahlsensoren im Kraftfahrzeug auf magnetoresisitiver Basis", VDI-Berichte Nr.509, 1984 bekannt.

In der DE,C2,26 06 012 (US 4,076,330) wird eine spezielle gemeinsame Anordnung zur Erfassung des Verschleißes eines Bremsbelages und zur Erfassung der Raddrehzahl beschrieben. Hierzu wird der erfaßte Bremsbelagverschleiß und die durch einen induktiv arbeitenden Sensor erfaßte Raddrehzahl über eine gemeinsame Signalleitung zu einer Auswerteeinheit geführt. Dies wird dadurch erreicht, daß der Raddrehzahlsensor in Reaktion auf einen erfaßten Bremsbelagverschleiß ganz oder teilweise kurzgeschlossen wird.

Andere Systeme wie sie beispielsweise aus der DE,C,43,22,440 beschrieben werden, benötigen zur Erfassung der Drehzahl und des Bremsbelagverschleißes an einem Rad bzw. einer Radbremse mindestens zwei Signalleitungen zwischen einer Radeinheit und der Auswerteeinheit.

Bei der obengenannten Drehzahlerfassung ist es bekannt, daß der Luftspalt zwischen dem sich drehenden Zahnkranz und dem eigentlichen Sensorelement einen erheblichen Einfluß auf die Qualität des Drehzahlsignals hat. Hierzu sei beispielsweise auf die DE-OS 32 01 811 verwiesen.

Weiterhin benötigt man beispielsweise bei Anfahrhilfen (sogenannten Hillholder) eine Information über die Drehrichtung der Räder. Hier ist insbesondere eine Information darüber notwendig, ob sich das Fahrzeug rückwärts bewegt. Hierzu sei beispielhaft auf die DE-OS 35 10 651 verwiesen.

Die obengenannten sowie weitere Informationen beziehungsweise Zusatzinformationen (beispielsweise Bremsbelagverschleiß, Luftspalt, Drehrichtung) werden im allgemeinen radnah erfaßt und in einer radfern angeordneten Steuereinheit ausgewertet. Hierzu müssen die Informationen zur Steuereinheit übertragen werden.

Bei einem Motor (Verbrennungs- und/oder Elektromotor) ist es bekannt, die Motordrehzahl mittels induktiver, magnetoresistiver oder Hall-Sensoren zu erfassen.

In der DE-Patentanmeldung 19609062.8 wird vorgeschlagen, die Informationen eines analogen Drehzahlssignals, das periodisch zwei vorgebbare Strom- oder Spannungsniveaus aufweist, mit den digitalen Informationen bezüglich des Bremsbelagverschleißes, des Luftspaltes und/oder der Drehrichtung derart zu überlagern, daß die Strom- oder Spannungspegel des analogen Drehzahlsignals in codierter Weise verändert werden. Die Erhöhung der Strompegel zur Übertragung der zusätzlichen digitalen Information hat den Vorteil, daß lediglich eine Zwei-Draht-Verbindung zwischen der Sensoreinheit und der Steuereinheit notwendig ist. Allerdings kommt es durch die Erhöhung der Strompegel neben einer Erhöhung der Verlustleistung zu einem erhöhten Spannungsabfall am Meßwiderstand in der Steuereinheit. Die Veränderung der Spannungspegel erhöht zwar nicht die Verlustleistung, macht aber eine Drei-Draht -Verbindung (Spannungsversorgung, Masse, Signalleitung) zwischen der Sensoreinheit und der Steuereinheit notwendig.

Aus der DE 198 38 433 A1 ist eine Rotationserfassungseinrichtung zur Erfassung einer Rotationssignalen eines sich drehenden Körpers bekannt. Eine in dieser Schrift weiter beschriebene Signalverarbeitungseinrichtung erzeugt in Abhängigkeit von den Rotationssignalen Pulssignale mit unterschiedlichen Pulsbreiten. Durch Erfassung der Pulsbreiten kann die Drehrichtung des drehbaren Körpers erfaßt werden.

Aus der WO 88/09026 A ist eine Signalübertragung bekannt, bei der eine Rotationsgeschwindigkeit in Kombination mit weiteren Zustandsinformationen mittels Pulsen übertragen wird. Indem der Empfänger die Länge der übertragenen Pulse erfaßt, kann dieser die Zustandsinformation bestimmen, die mit dem Signal übertragen werden.

Aus der DE 196 34 715 A1 ist ein Sensormodul bekannt, bei der das Drehverhalten eines rotierenden Körpers erfasst wird. Dabei erzeugt das Sensormodul ein das Drehverhalten darstellendes Signal mit einem überlagerten Status- und/oder Zusatzsignal. Die überlagerten Statussignale können dabei unterschiedliche Wertigkeiten besitzen.

Die Aufgabe der vorliegenden Erfindung ist es, eine möglichst einfache und sichere Überlagerung der Drehzahlinformation und der Zusatzinformation zu realisieren.

Diese Aufgabe wird durch die Merkmale des Anspruchs 1 gelöst.

Vorteile der Erfindung

Die Erfindung geht aus von einem System zur Erzeugung eines Signals, wobei das Signal neben ersten Informationen, die die Drehgeschwindigkeit eines rotierenden Teils repräsentieren, wenigstens zweite Informationen enthält. Das Signal wechselt zeitlich zwischen einem ersten und einem zweitem Strom- und/oder Spannungsniveau (High/Low).

Der Kern der Erfindung besteht nun darin, daß die ersten Informationen durch den zeitlichen Abstand zwischen einem gleichartigen Wechsel entweder zwischen dem ersten zu dem zweiten Niveau (High/Low-Flanke) oder einem gleichartigen Wechsel zwischen dem zweiten zu dem ersten Niveau (Low/High-Flanke) repräsentiert werden. Dagegen werden die zweiten Informationen durch die zeitliche Länge entweder des ersten oder des zweiten Niveaus repräsentiert.

Gegenüber dem in der Beschreibungseinleitung erwähnten Stand der Technik hat die Erfindung den Vorteil, daß keine weiteren Strom- beziehungsweise Spannungspegel zur Übertragung der Zusatzinformationen notwendig sind. Weiterhin ist die Auswertung der Zusatzinformationen relativ einfach zu realisieren, da hierzu nur die zeitliche Länge entweder des ersten oder des zweiten Niveaus, also die Pulsbreite, gemessen werden muß. Die Erfindung bietet darüber hinaus die Möglichkeit, durch möglichst lange Pulse eine hohe Datensicherheit zu erzielen.

In einer besonders vorteilhaften Ausgestaltung findet das erfindungsgemäße System bei einem Kraftfahrzeug Verwendung. Die ersten Informationen repräsentieren die Drehzahl eines Fahrzeugrades, die Drehzahl eines als Benzin-, Diesel- und/oder Elektromotor ausgebildeten Fahrzeugmotors und/oder die Drehzahl einer mit dem Fahrzeuggetriebe wirkungsgekoppelten Welle. Die zweiten Informationen bestehen aus wenigstens einem Informationsanteil, wobei die Informationsanteile

- den Abstand zwischen dem rotierenden Teil und einem die Drehgeschwindigkeit erfassenden Sensorelement und/oder
- den Bremsbelagverschleiß an wenigstens einer Fahrzeugradbremse und/oder

- die Drehrichtung (DR) des rotierenden Teils und/ oder
- die Einbaulage (EL) eines die Drehgeschwindigkeit erfassenden Sensorelement

repräsentieren.

In besonders vorteilhaften Weise werden den durch das Signal zu übertragenden Informationsanteilen unterschiedliche Prioritäten derart zugewiesen, daß bei Vorliegen des Informationsanteils mit der höchsten Priorität die anderen Informationsanteile nicht übertragen werden. Aus diesen Weise ist gewährleistet, daß die wichtigsten Informationen sicher übertragen werden.

Erfindungsgemäß werden durch die zeitlichen Abstände zwischen den gleichartigen Wechseln (High/Low-Flanke oder Low/High-Flanke) die Drehzahlinformationen übertragen. Bei einer besonders vorteilhaften Ausgestaltung der Erfindung wird das Signal derart erzeugt, daß zeitlich vor diesen für die Drehzahlinformation wichtigen gleichartigen Wechseln (High/Low-Flanke oder Low/High-Flanke) wenigstens eine vorgebbare Zeitdauer lang das Strom- und/oder Spannungsniveau (High/Low) eingestellt wird, das das Signal vor diesen Wechseln aufweist. Durch die erfindungsgemäße Einstellung eines Niveaus vor dem eigentlichen Wechsel ("Vorbit"), der zur Drehzahlinformation auszuwerten ist, wird die sichere Übertragung des Drehzahlsignals in jedem Fall gewährleistet.

Diese Einstellung eines Niveaus vor dem eigentlichen Wechsel ("Vorbit") kann dadurch geschehen, daß ein Triggersignal erzeugt wird und in Reaktion auf die Erzeugung des Triggersignals das Signal auf das erste oder zweite Strom- und/oder Spannungsniveau (High/Low) gesetzt wird. Hierbei ist insbesondere vorgesehen, daß das Triggersignal abhängig von der Drehgeschwindigkeit des rotierenden Teils erzeugt wird.

Eine andere Ausgestaltung der Erfindung beinhaltet, daß das Signal dann, wenn das rotierende Teil stillsteht, derart erzeugt wird, daß es das erste oder zweite Strom- und/oder Spannungsniveau (High/Low) eine vorgebbar feste Zeitdauer lang aufweist. Hierdurch kann der Stillstand des rotierenden Teils erkannt werden. Weiterhin kann hierdurch die ordnungsgemäße Funktion des Sensorelements und der Übertragungsleitungen überprüft werden.

Eine weitere Ausgestaltung der Erfindung beschreibt eine vorteilhafte Ausgestaltung der Auswertung des erfindungsgemäß erzeugten Signals. Zu dieser Auswertung wird zunächst aus dem erfindungsgemäß erzeugten Signal eine die Drehgeschwindigkeit des rotierenden Teils repräsentierende Drehzahlgröße aus dem zeitlichen Abstand zwischen einem (gleichartigen) Wechsel entweder zwischen dem ersten zu dem zweiten Niveau (High/Low-Flanke) oder einem (gleichartigen) Wechsel zwischen dem zweiten zu dem ersten Niveau (Low/High-Flanke) ermittelt. Diese Drehzahlgröße wird mit wenigstens einem Schwellenwert verglichen. Die Auswertung der zeitlichen Länge entweder des ersten oder des zweiten Niveaus zur Ermittlung der zweiten Informationen geschieht dann abhängig von dem Vergleichsergebnis. Bei der Auswertung der zweiten Informationen wird also vorteilhafterweise die Drehgeschwindigkeit des rotierenden Teils berücksichtigt. Dabei kann vorgesehen sein, daß bei Vorliegen größerer Drehzahlgrößen nur noch Teile der zweiten Informationen ausgewertet werden. Hierdurch ist gewährleistet, daß nur noch die zweiten Informationen ausgewertet werden, die sicher übertragen werden können.

Insbesondere ist vorgesehen, daß die Informationsanteile mit der höchsten Priorität bis zu größeren Drehzahlgrößen hin ausgewertet werden als die Informationsanteile mit geringerer Priorität.

Weitere vorteilhafte Ausgestaltungen sind den abhängigen Ansprüchen zu entnehmen.

Zeichnung

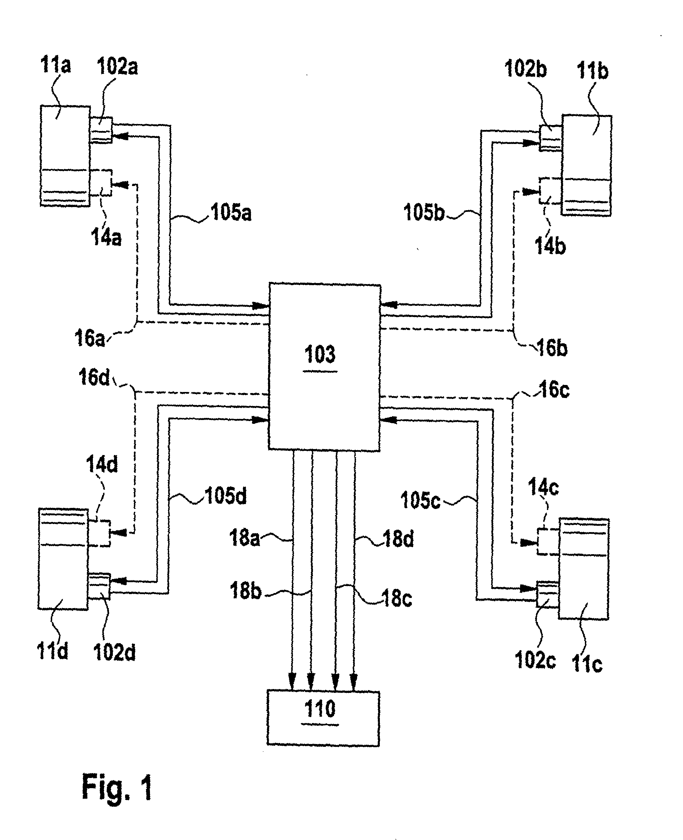

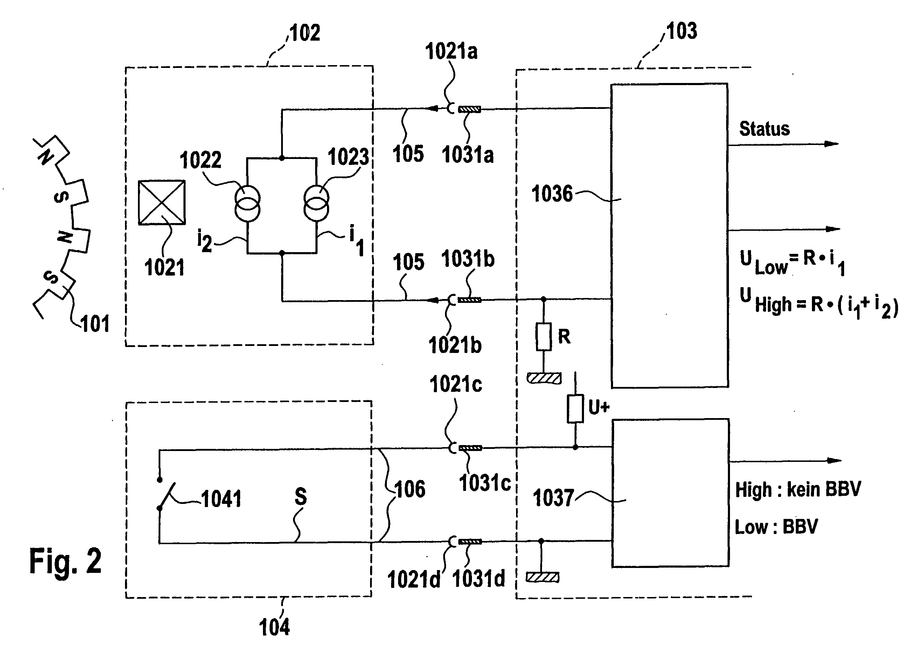

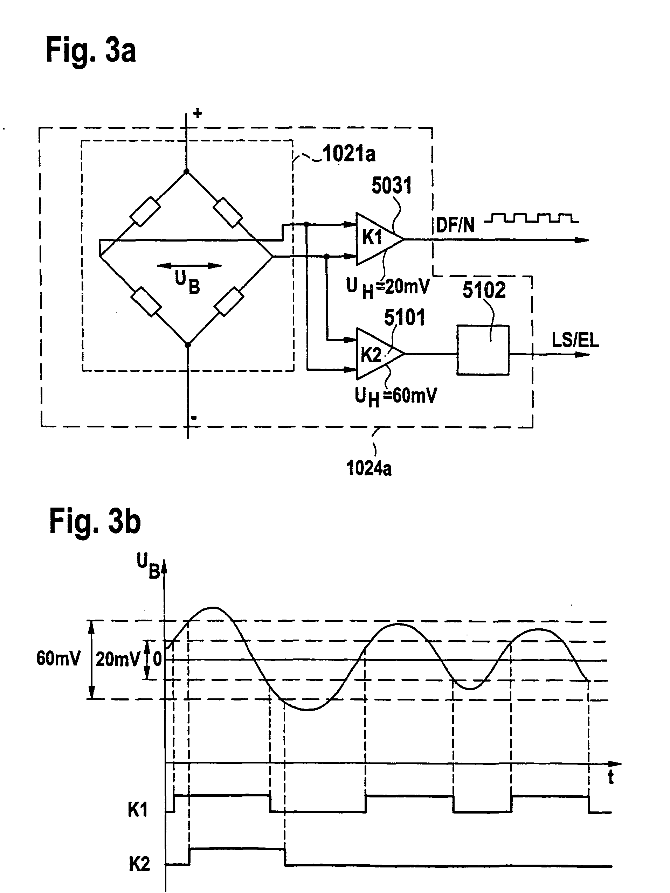

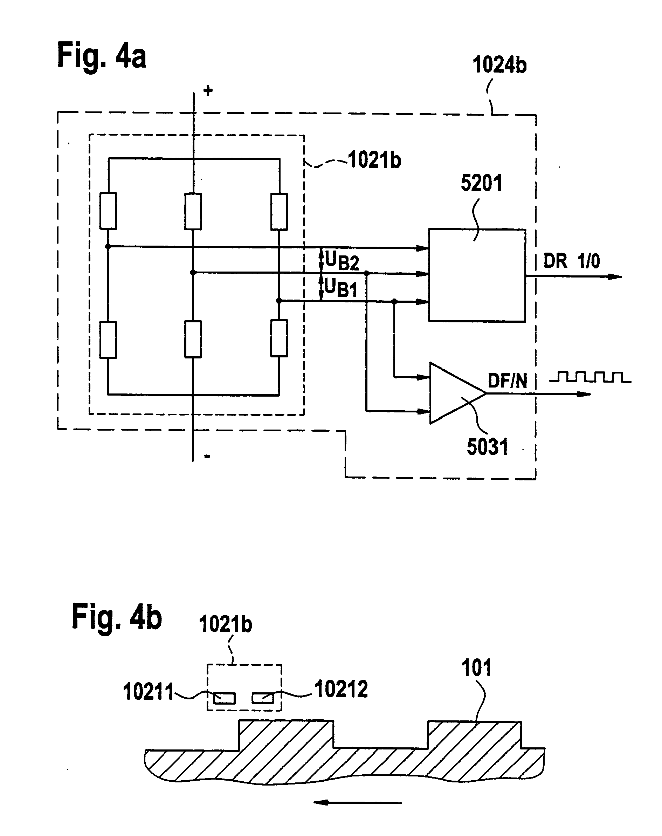

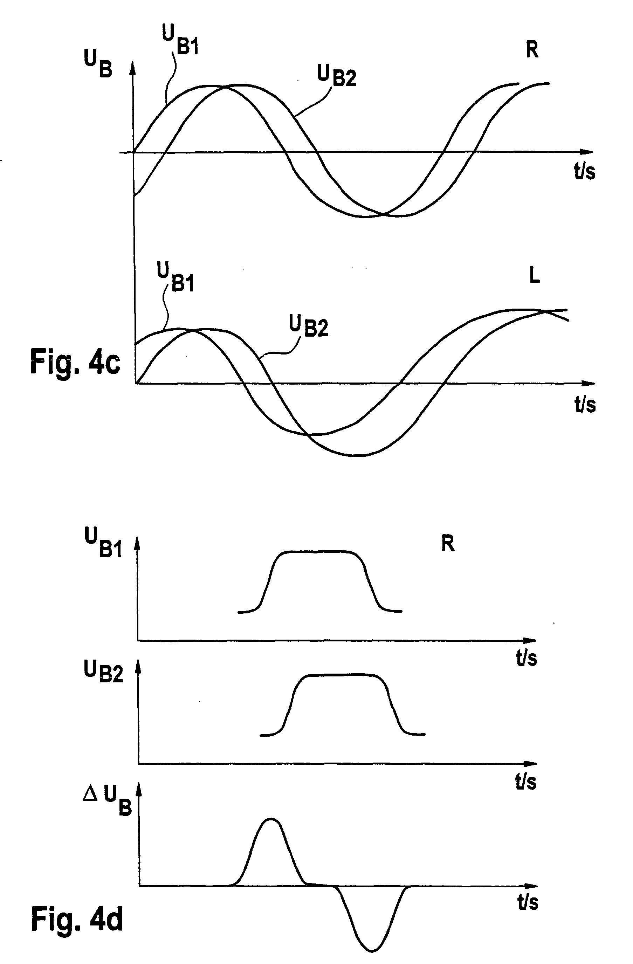

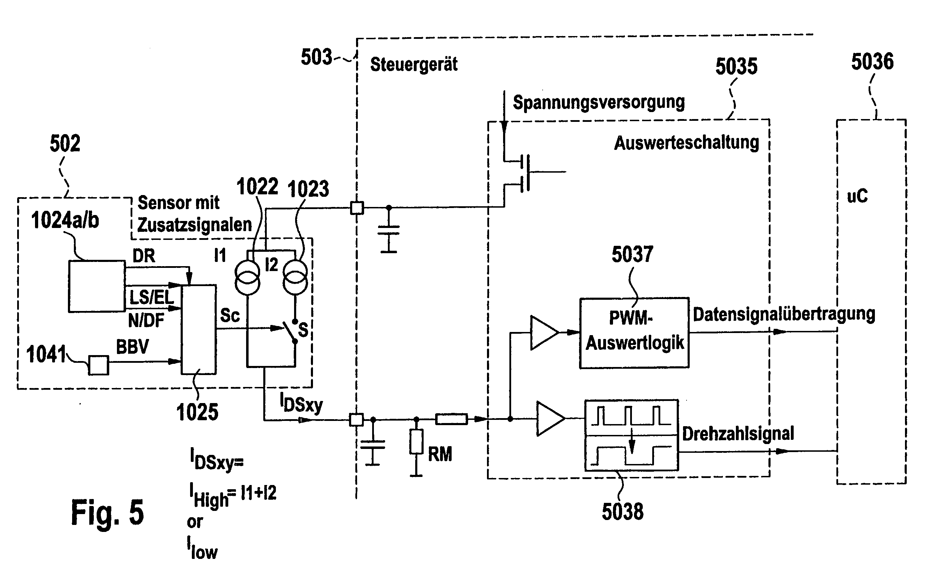

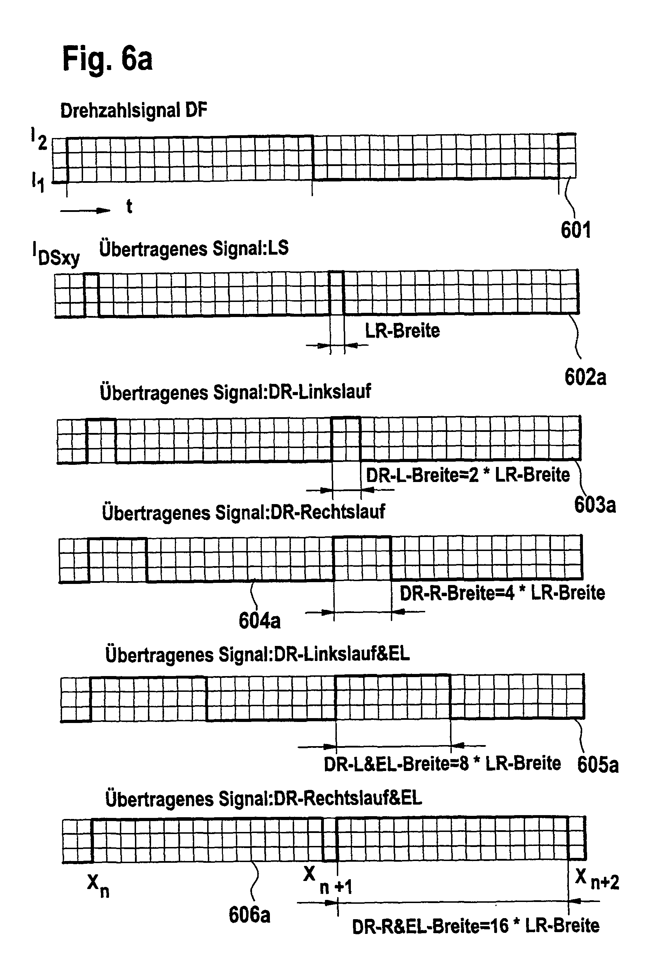

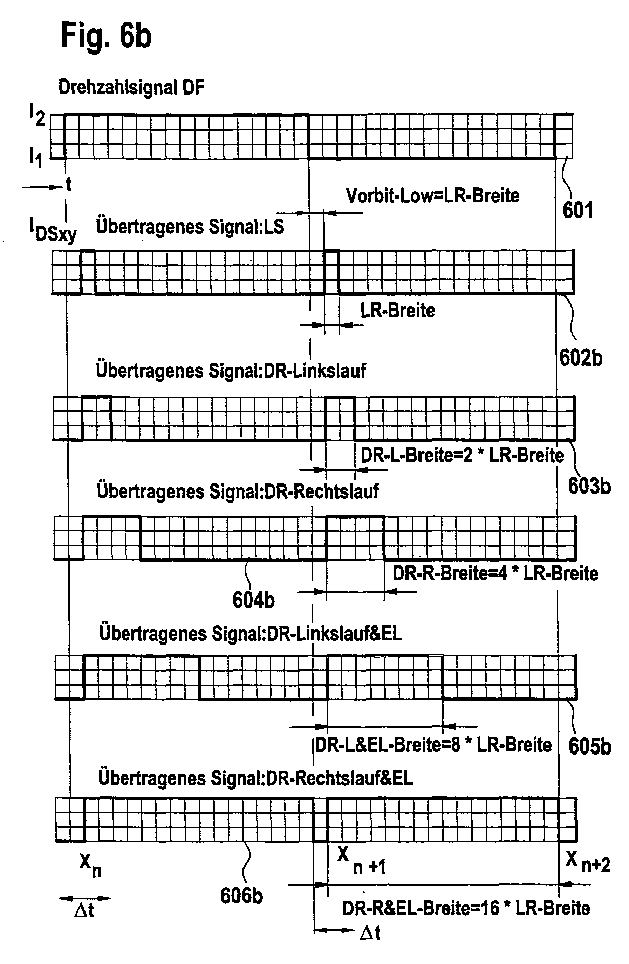

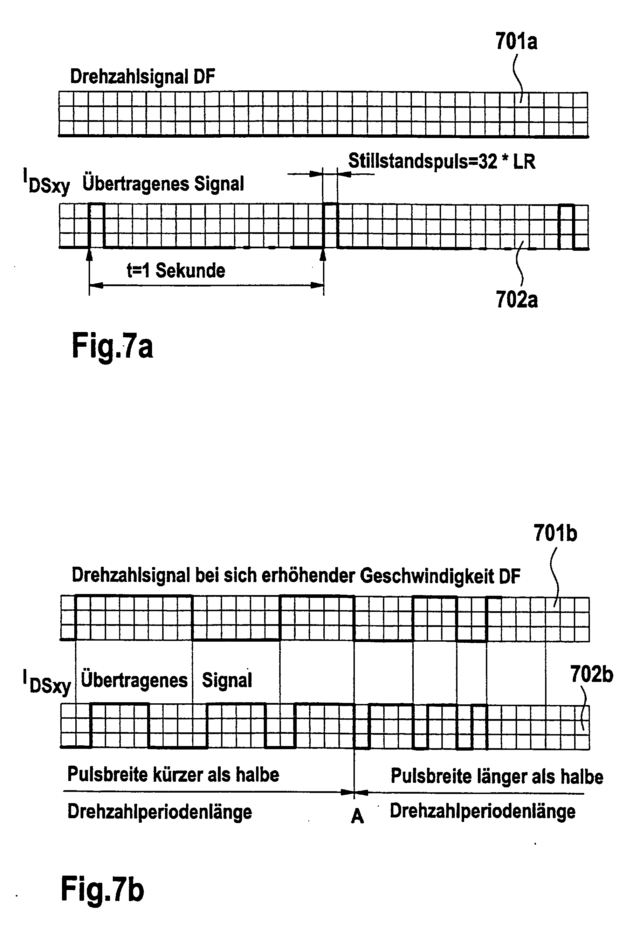

Die Figur 1 zeigt schematisch ein Blockschaltbild wie es aus dem Stand der Technik bekannt ist. Die Figur 2 zeigt eine einfache Kombination eines aktiven Drehzahlfühlers mit einer Bremsbelagverschleißerfassung. Die Figuren 3a, 3b, 4a, 4b, 4c und 4d stellen die Erfassung des Luftspaltes und der Drehrichtung anhand von Blockschaltbildern und zugehörigen Signalverläufen dar. In dem in der Figur 5 gezeigten Blockschaltbild mit den zugehörigen Signalverläufen in den Figuren 6 und 7 ist eine Ausgestaltung der Erfindung zu sehen.

Ausführungsbeispiel

Anhand der im folgenden beschriebenen Ausführungsformen soll die Erfindung detailliert beschrieben werden.

Die Figur zeigt als Übersichtsblockschaltbild ein System zur Ermittlung des Bremsbelagverschleißes und von Raddrehzahlen bei einem Kraftfahrzeug.

Mit dem Bezugszeichen 11a-d sind dabei die Radeinheiten eines Kraftfahrzeugs bezeichnet. Zu diesen Radeinheiten gehören insbesondere die Räder, deren Umdrehungsgeschwindigkeiten (die Raddrehzahlen) gemessen werden sollen, und das zu jeder Radeinheit zugeordnete Bremssystem (Reibungsbremse). Mit dem Bezugszeichen 102a-d sind die jedem Rad zugeordneten Drehzahlfühler und Bremsbelagverschleißfühler bezeichnet, die, soweit es die Erfindung betrifft, anhand der Figur 2 bzw. 3 näher beschrieben werden. Zu dem über die Erfindung hinausgehenden Aufbau dieser Fühler soll ausdrücklich auf den eingangs erwähnten Stand der Technik verwiesen werden.

Die Ausgangssignale der Drehzahlfühler und Bremsbelagverschleißfühler 102a-d sind mit dem Steuergerät 103 verbunden, wobei mit 105a-d die Übertragungsleitungen dargestellt werden. Im Steuergerät 103 werden dann die mittels der Übertragungsleitungen 105a-d übertragenen Informationen zentral für alle Radeinheiten ausgewertet. Der Zustand der Bremsbeläge wird als Auswertungsergebnis vom Steuergerät 103 über die Leitungen 18a-d dem Anzeigeinstrument 110 zugeführt. Hierzu ist im allgemeinen vorgesehen, daß der Fahrer bei einem gewissen Abnutzungsgrad einer oder mehrere Bremsbeläge eine entsprechende Information zugewiesen bekommt.

Der Vollständigkeit halber sind mit den Bezugszeichen 14a-d noch die Bremssysteme der einzelnen Radeinheiten 11a-d skizziert, die vom Steuergerät 105 aus angesteuert werden können.

Die Figur 2 zeigt eine einfache Kombination eines aktiven Drehzahlfühlers mit einer Bremsbelagverschleißerfassung. Wie schon eingangs erwähnt kann als "aktiver" Drehzahlfühler 102 ein bekannter Hall-Drehzahlfühler oder ein bekannter magneto-resistiver Drehzahlfühler vorgesehen sein. In der Figur 2 ist hierzu schematisch zu sehen, daß ein Sensorelement 1021 einen inkrementalen Rotors 101 (Geberrad) magnetischer passiver Art abtastet. Abhängig von den abgetasteten Inkrementen des Rotors 101 werden durch das Sensorelement 1021 zwei Strompegel $i_1$ und $i_2$ eingestellt. Dies ist in den Figur 2 mit dem Zu- bzw. Abschalten zweier Stromquellen 1022 und 1023 dargestellt.

Der Drehzahlfühler 102 ist mit dem Steuergerät 103 über die Leitungen 105 bzw. über die Steckverbindungen 1021a und b und 1031a und b verbunden. Der Eingangsverstärker 1036 detektiert mit Hilfe des Eingangswiderstandes R die den Strompegeln des Drehzahlfühlers 102 entsprechenden Spannungswerte

$$U_{Low} = R * i_1$$

$$U_{High} = R *'(i_1 + i_2)$$

Ein typischer Verlauf bei im wesentlichen konstanter Raddrehzahl ist im oberen Signalzug 601 der Figuren 6a und 6b zu sehen. Durch eine Auswertung der Frequenz dieses Signals gelangt man zur gewünschten Raddrehzahl.

Im unteren Teil der Figur 2 ist schematisch eine bekannte Erfassung 1104 des Bremsbelagverschleißes an einer Radbremse zu sehen. Wie schon eingangs erwähnt ermittelt der aus dem Stand der Technik an sich bekannte Bremsbelagverschleißfühler die Abnutzung des Bremsbelages einer Fahrzeugbremse, indem beispielsweise in einer gewissen Tiefe der Bremsbeläge Kontaktstifte eingelassen sind, die einen Kontakt auslösen, wenn der Bremsbelag bis zu dieser Tiefe abgenutzt ist. Dieser Kontakt ist in der Figur 2 mit dem Schalter 1041 bezeichnet. Der Schalter 1041 ist im Normalfall (keine anzeigerelevanter Bremsbelagverschleiß) offen, wobei die Spannung U+ nicht geerdet wird. Erreicht der Bremsbelag einen gewissen Abnutzungsgrad, so wird der Schalter 1041 geschlossen, was wegen der Erdung durch die Verbindung 106 bzw. die Steckverbindung 1012 und 1031 in der Auswerteschaltung 1037 detektiert wird.

Wie man bei dem in der Figur 2 gezeigten Ausführungsform erkennt, sind zur Übertragung der Raddrehzahlinformationen und der Informationen über den Zustand des Bremsbelages jeweils getrennte Signalleitungen 105 und 106 notwendig.

Die Figur 3a zeigt beispielhaft die Erfassung eines übermäßigen Abstands eines Hall- beziehungsweise magnetoresistiven Sensors gegenüber dem schon beschriebenen Zahnkranz des Fahrzeugrades, dessen Drehgeschwindigkeit erfaßt werden soll. Bei dem Sensorelement 1021a kann es sich um das mit demselben Bezugszeichen bezeichnete Sensorelement in der Figur 2 handeln. Das Element 1021a ist im allgemeinen als bekannte Wheatstone-Brücke mit einer typischen ringförmigen Anordnung von Widerständen ausgebildet. Durch das Vorbeigleiten der einzelnen Segmente des nicht dargestellten Zahnkranzes (101 in Fig.2) wird in dieser Wheatstone-Brücke die Brückenspannung $U_B$ erzeugt, die den Komparatoren 5031 und 5101 zugeführt werden. Der Komparator K1 dient zur Auswertung der Raddrehzahl. In dem Komparator K2 5101 findet eine weitere Auswertung der Brückenspannung derart statt, daß diese Brückenspannung mit einem relativ hohen Schwellwert $U_H$ verglichen wird. Zum Hintergrund der beiden Schwellwertvergleiche soll im folgenden auf die Figur 3b eingegangen werden.

Die Figur 3b zeigt einen typischen Signalverlauf der Brückenspannung über der Zeit. Je nach der Geschwindigkeit des Vorbeigleitens der einzelnen Segmente des Zahnkranzes nimmt die Brückenspannung periodisch zu beziehungsweise periodisch ab. Bleibt der Abstand, der Luftspalt, zwischen dem Zahnkranz und der Wheatstone-Brücke 1021a konstant, so weist die Brückenspannung eine konstante Amplitude auf. Wird dieser Abstand jedoch zu groß, so nimmt die Amplitude der Brückenspannung ab. Dieser Fall ist in der Figur 3b dargestellt.

Ein erster Schwellwertvergleich im Komparator 5031 vergleicht das Brückenspannungssignal mit einem relativ geringen Schwellwert, beispielsweise 40 mV. Ausgangsseitig liefert der Komparator 5031 dann das im unteren Signalverlauf K1 der Figur 3b gezeigte Ansteuersignal für die Stromquellen $i_1$ und $i_2$ (siehe Figur 2). Das Signal K1 repräsentiert also, auch bei einem sich vergrößernden Luftspalt, die Raddrehzahl. Der Komparator 5101 überprüft die Amplitude des Brückenspannungssignals dadurch, daß in diesem Komparator eine relativ hohe Schwelle von beispielsweise 60 mV eingestellt ist. Ist der Abstand zwischen dem Zahnkranz und der Wheatstone-Brücke, der Luftspalt, hinreichend gering, so liegt die Amplitude des Brückenspannungssignals oberhalb der Schwelle des Komparators 5101. Das Ausgangssignal des Komparators 5101 zeigt, wie im unteren Signalverlauf K2 in der Figur 3b zu sehen ist, im ordnungsgemäßen Fall mit einem zeitlichen Verzug des Signals K1 gegenüber dem Signal K1. Bleibt jedoch das Komparatorsignal K2 aus, so nimmt die Amplitude des Brückenspannungssignals ab, was auf einen übermäßigen Luftspalt schließen läßt.

Das Ausbleiben des Signals K2 wird in der Einheit 5102 detektiert, wobei ein Ausbleiben des Signals K2 eine Erzeugung des digitalen Signals LS zur Folge hat.

Zusammenfassend ist zu der Luftspalterkennung zu sagen, daß mit Hilfe eines aktiven Sensors, beispielsweise eines HallSensors oder eines magnetoresistiven Sensors, die Drehzahlsignale eines Rades erfaßt werden. Die Sensoren beinhalten eine Wheatstone-Brücke, die durch ein sich änderndes Magnetfeld verstimmt wird. Aus dieser Verstimmung wird das Signal für die Drehzahl gewonnen. Der Betrag der Verstimmung steht in einem festen Verhältnis zur Größe der Magnetfelddifferenz zwischen den beiden Brückenhälften. Die Magnetfelddifferenz ist unter anderem abhängig vom Abstand des Sensors zu dem Polrad. Bewertet man den Betrag der Brückenverstimmung, so kann man auf den Luftspalt zwischen dem Sensor und dem Polrad schließen. Diese Bewertung kann mit einem Komparator 5101 erfolgen, der eine größere Hysterese ($U_H$ = 60 mV) hat als der normale Nutzsignalkomparator 5031 ($U_H$ = 20 mV). Ist der Luftspalt klein, so schalten beide Komparatoren, ist jedoch der Luftspalt zu groß, so schaltet nur noch der Nutzsignalkomparator 5031. Auf diese Weise hat man ein Frühwarnsystem für einen zu großen Luftspalt, ohne gleich die Raddrehzahlinformation zu verlieren. Diese Information kann beispielsweise als Bandendkontrolle bei der Kraftfahrzeugherstellung, in der Werkstatt oder während der Fahrt genutzt werden.

Durch die Einführung einer dritten, in der Figur 3b nicht dargestellten Schwelle von beispielsweise 30 mV kann die falsche Einbaulage des Sensors 1021a detektiert werden. Überschreitet das in der Figur 3b gezeigte Signal die niedrige Schwelle von beispielsweise 30 mV nicht, so läßt dies darauf schließen, daß das Sensorelement 1021a falsch eingebaut worden ist. Ein entsprechend eingestellter, in der Figur 3a nicht dargestellter Komparator gibt dann das Signal EL "falsche Einbaulage" ab. Die Funktion des dritten Komparators ist in der Figur 3a dem zweiten Komparator 5101 zugeordnet.

Das in der Figur 3a gezeigt Gesamtsensorelement 1024a liefert also neben dem Drehzahlsignal N beziehungsweise DF die Signale EL und LS. Das Signal EL kann beispielsweise den Wert 1 bei falscher und den Wert 0 bei korrekter Einbaulage des Sensorelements 1021a einnehmen. Das Signal LS kann beispielsweise den Wert 1 bei unzulässig großem und den Wert 0 bei hinreichend geringem Luftspalt zwischen Sensorelement 1021a und Geberrad 101 einnehmen.

Die Figuren 4a und 4b zeigen beispielhaft die Auswertung zur Drehrichtungserkennung eines Rades. Hierzu ist in der Figur 4a ein gegenüber der Figur 3a modifizierter Hall- beziehungsweise magnetoresistiver Sensor 1021b vorgesehen. Die Modifikation besteht darin, daß die bekannte Wheatstone-Brücke, wie in der Figur 3a zu sehen ist, um weitere zwei Widerstände ergänzt worden ist. Statt der modifizierten Wheatstone-Brücke kann der modifizierte Hall- beziehungsweise magneto-resistiver Sensor auch aus wenigstens zwei separaten sensitiven Elementen 10211 und 10212 beziehungsweise zwei vollständige Wheatstone-Brücken aufweisen. Auch hier erzeugen die einzelnen Elemente des Zahnkranzes, Polrades beziehungsweise Geberrades (101, Figur 2) entsprechende Änderungen in den Brückenspannungssignalen $U_{B1}$ und $U_{B2}$. Diese Brückenspannungssignale werden der Auswerteeinheit 5201 zugeführt. Gleichzeitig wird zur Auswertung des Nutzsignals wenigstens eine der Brückenspannungssignale dem schon beschriebenen Komparator 5031 zugeführt. Die Funktion der Drehrichtungserkennung 5201 soll anhand der Figur 4c und 4d dargestellt werden.

In den Figuren 4c und 4d ist der Verlauf der in der Figur 4a gezeigten Brückenspannungssignale dargestellt. Hierzu kann der Verlauf über der Zeit t oder der Verlauf über den Weg s beziehungsweise über dem Drehwinkel des Geberrades bestrachtet werden. Je nach Drehrichtung des Rades, wird entweder zuerst der rechte Teil der modifizierten Wheatstone-Brücke 5030' zuerst verstimmt oder der linke Teil. Bei einem Rechtslauf des Rades eilt die Brückenspannung $U_{B1}$ der Brückenspannung $U_{B2}$ voraus, während es bei einem Linkslauf des Rades umgekehrt ist. Mittels der Drehrichtungsauswertung 5201 wird die Phasenverschiebung der beiden Brückenspannungsverläufe ausgewertet, woraufhin das Signal DR dann erzeugt wird, wenn sich das Rad rückwärts bewegt. Alternativ hierzu kann, wie in der Figur 4d zu sehen ist, die Differenz $\Delta U_B$ zwischen den beiden Brückenspannungwerten $U_{B1}$ und $U_{B2}$ gebildet werden. Aus dem Verlauf dieser Differenz $\Delta U_B$, insbesondere aus den Lagen der Maxima und Minima (Peaks nach "oben" oder "unten") erhält man die Information DR über die Drehrichtung (vorwärts/rückwärts).

Das in der Figur 4a gezeigt Gesamtsensorelement 1024b liefert also neben dem Drehzahlsignal N beziehungsweise DF das digitale Drehrichtungssignal DR mit den Werten 1/0.

Die Figur 5 zeigt eine Ausgestaltung des erfindungsgemäßen Systems. Hierbei ist mit dem Bezugszeichen 502 eine Sensoreinheit mit Zusatzsignalen und mit Bezugzeichen 503 eine Auswerteeinheit bezeichnet.

Zur Sensoreinheit 502 gehört zunächst das Gesamtsensorelement 1024a/b. Das Element 1024a/b soll dabei als Kombination der beschriebenen Elemente 1024a und 1024 b sowohl das Drehzahlsignal N beziehungsweise DF als auch die Zusatzsignale LS, EL und DR liefern. Zur Sensoreinheit 502 gehört weiterhin der anhand der Figur 2 beschriebene Schalter 1041 zur Erfassung des Bremsbelagverschleißes BBV.

Das Drehzahlsignal DF und die Zusatzsignale EL, LS, DR und BBV werden der Einheit 1025 zugeführt. Durch die Einheit 1025 wird mittels des Schaltsignal Sc und des Schalters S die Stromquelle 1023 I2 an- oder abgeschaltet.

Die Funktionsweise der Einheit 1025 wird zunächst in einer ersten Ausgestaltung anhand der Figur 6a gezeigt.

Im oberen Signalzug 601 der Figur 6a ist zunächst das ursprüngliche Drehzahlsignal DF dargestellt. In dem hier beschriebenen Ausführungsbeispiel wird jeder Wechsel (Flanken) des DF-Signals (Signalzug 601) von Low (Stromwert I1) nach High (Stromwert I2) und umgekehrt von High nach Low als Triggersignal dazu benutzt, einen Strompuls vorgebbarer Dauer zu veranlassen. Die Dauer hängt von den Werten der Zusatzsignale EL, LS, DR und BBV ab.

Im Normalbetrieb dreht sich das Geberrad 101 (Figur 2) entweder im Rechts- oder im Linkslauf. Dies wird durch das Signal DR angezeigt. Befindet sich beispielsweise das Geberrad 102 im Linkslauf, so werden durch die Flanken des Signals DF Strompulse von 100 $\mu$s Dauer veranlaßt beziehungsweise getriggert. Entsprechend wird das Schaltsignal Sc durch die Einheit 1025 gebildet, so daß als Ergebnis der im Signalzug 603a gezeigte zeitliche Verlauf des Signals $I_{DSxy}$ am Ausgang der Einheit 502 anliegt. Liegt ein Rechtslauf des Geberrades vor, so werden Pulse der Dauer 200 $\mu$s erzeugt. Es liegt dann der im Signalzug 604a gezeigte Signalverlauf an.

Die Signalzüge 605a und 606a zeigen die zeitlichen Verläufe des Signals $I_{DSxy}$ in dem Fall an, in dem eine falsche Einbaulage (Signal EL) während eines Linkslaufs (605a, Pulsdauer: 400 $\mu$s) beziehungsweise während eines Rechtslaufs (606a, Pulsdauer: 800 $\mu$s) vorliegt.

Die Signalzüge 605a und 606a sind insbesondere dann von Bedeutung, wenn nach der Montage eines Sensorelements, beispielsweise bei der Fabrikation des Fahrzeugs oder in der Werkstatt, die korrekte Einbaulage zu überprüfen ist.

Zur Übertragung eines übermäßigen Bremsbelagverschleißes kann eine Pulsdauer von beispielsweise 600 $\mu$s veranlaßt werden. Dies ist in der Figur 6a nicht zu sehen.

Wird durch das Vorliegen eines entsprechenden Wertes LS angezeigt, daß ein übermäßiger Luftspalt vorliegt, so wird eine (relativ kurze) Pulsdauer von 50 $\mu$s veranlaßt. Dies im Signalzug 602a zu sehen. Da beispielsweise bei der Sensierung der Raddrehzahl bei einem Bremssystem das Vorliegen eines übermäßigen Luftspalts sicherheitsrelevant ist, werden bei Vorliegen des Signals LS alle anderen Zusatzinformationen DR, EL und BBV überblendet. Das bedeutet, daß, neben der eigentlichen Drehzahlinformation, lediglich die Information "übermäßiger Luftspalt" durch die Triggerung des 50 $\mu$s-Pulses übertragen wird. Das heißt, daß an der Luftspaltgrenze weder ein Drehrichtungssignal noch das Einbaulagesignal noch der Bremsbelagverschließ übertragen wird.

Die eigentliche Drehzahlinformation steckt in jedem Fall in dem zeitlichen Abstand zwischen den Low-High-Flanken des Signals $I_{DSxy}$.

Den in der Figur 6b gezeigten Signalverläufen liegen ähnliche Gegebenheiten zugrunde wie denen in der Figur 6a dargestellten. Der wesentliche Unterschied besteht darin, daß vor der Veranlassung beziehungsweise Triggerung der Pulse durch die Flanken des Signals DF (Signalzug 609) zunächst eine bestimmte Zeitdauer $\Delta t$ das Signal $I_{DSxy}$ auf den Wert I1 beziehungsweise Low gesetzt wird. Dies geschieht auch dann, wenn durch die zu übertragende Zusatzinformation der Pegel I2 eingestellt ist. Durch die Vorschaltung eines solchen Low-Bits von beispielsweise 50 µs wird sichergestellt, daß die Drehzahlinformation in jedem Fall, also auch bei einer durch die Zusatzinformationen "langem" High-Pegel, sicher übertragen wird.

Die Signalzüge 602b bis 606b sind, bis auf das vorgeschaltete Low-Bit, mit denen in der Figur 6a identisch.

Während bisher die Betriebszustände dargestellt wurden, in den das Geberrad 101 rotiert, soll anhand der Figur 7a der Signalverlauf des Signals $I_{DSxy}$ im Stillstand beschrieben werden.

Wenn innerhalb einer vorgebbaren Zeit, beispielsweise innerhalb einer Sekunde kein Flankenwechsel des Drehzahlsignals DF eintritt (Signalzug 701a), so wird von dem Sensorelement 502 trotzdem ein Signal $I_{DSxy}$ wie in dem Signalzug 702a gezeigt ausgegeben. Der zeitliche Abstand zwischen zwei solchen Stillstandspulsen beträgt in dem dargestellten Beispiel 1 s. Die Pulsdauer beträgt hier 32 mal der LS-Pulsdauer von 50 µs, also 1,6 ms. Diese Pulsbreite wird auch nach einer Unterspannung ausgegeben, so lange kein Drehzahlsignal DF erkannt wird.

In der Figur 7b ist die Situation bei höheren Drehgeschwindigkeiten beziehungsweise bei sich erhöhender Drehgeschwindigkeiten dargestellt. Dies erkennt man aus der ansteigenden Frequenz des Signals DF im Signalzug 701b.

Bei steigender Drehzahl tritt das Problem auf, daß die die Zusatzinformation (LS, EL, DR, BBV) enthaltene Pulsbreite (in diesem Beispiel 200 µs) unter Umständen länger ist als die halbe Periodenlänge des Drehzahlsignals DF. Vor dem in der Figur 7b gezeigten Zeitpunkt A ist die Pulsbreite kürzer als die halbe Drehzahlperiode. Vor dem Zeitpunkt A kann somit die Zusatzinformation mit der entsprechenden Pulsbreite sicher übertragen werden. Nach diesem Zeitpunkt A ist jedoch die halbe Periodenlänge des Signals DF für die Pulsbreite zu kurz.

Bis zu einer bestimmten Drehgeschwindigkeit, beispielsweise bei einem Fahrzeugrad bis ca. 50 km/h und Tastverhältnis $TV_{grenz}$ von beispielsweise 0,3, kann also die Signal-Pulsbreite korrekt, also in voller Länge, ausgegeben werden. Oberhalb dieser Geschwindigkeit (zum Zeitpunkt A in der Figur 7b) kann nur noch eine reduzierte Pulsbreite ausgegeben werden. Dies wird in der noch zu beschreibenden Auswertung 503 berücksichtigt. Die Auswertung 503 kennt dieses Grenzen und wertet oberhalb dieser Grenzen nur noch die Signale aus, deren Pulsbreite sicher übertragen werden können.

In der Figur 5 wird das Signal $I_{DSxy}$ durch entsprechende Kontakte der Auswertung 503 zugeführt. Wesentlich für die Auswerteschaltung 5035 sind die Blöcke 5037 und 5038.

In der Pulsweitenmodulation/PWM-Auswertelogik 5037 werden, nach einer vorgeschalteten Verstärkung, die Pulsbreiten des Signals $I_{DSxy}$ (siehe beispielsweise Figuren 6a, 6b, 7a und 7b) ausgewertet. Wie erwähnt ist jeder Pulsbreite ein Zusatzsignal zugeordnet; diese Zuordnung ist in der Auswertung 503 abgespeichert. Somit kann dem Rechner 5036 die Zusatzinformation (LS, EL DR, BBV) zugeleitet werden.

Im Block 5038 wird, nach einer vorgeschalteten Verstärkung, der zeitliche Abstand zwischen zwei Pulsflanken von Low nach High ermittelt. Wie schon erwähnt entspricht dies der Drehzahlfrequenz, die dem Rechner 5036 zur weiteren Auswertung zugeleitet wird.

In dem Block 5038 ist durch die zwei Signalzüge schematisch gezeigt, daß jede Low-High-Signalflanke des oberen Signalzuges, der das Signal $I_{DSxy}$ darstellt, im unteren Signalzug einen Wechsel zwischen den Strom- beziehungsweise Spannungspegeln bewirkt. Auf diese Weise wird im Block 5038 das (ursprüngliche) Drehzahl DF rekonstruiert.

Wie schon erwähnt sind im Block 5037 die Grenzen abgespeichert bis zu denen die Pulsbreiten, die die Zusatzinformationen enthalten, sicher übertragen werden können. Oberhalb der Grenzen werden dem Rechner 5036 die Zusatzinformationen nicht mehr zugeleitet.

Zusammenfassend folgendes:

Wie das Ausführungsbeispiel zeigt, sind zur erfindungsgemäßen Datenübertragung zwischen Sensorelement 502 und Auswerteschaltung 503 nur zwei Strombeziehungsweise Spannungspegel erforderlich.

Die Auswertung der Zusatzinformationen ist relativ einfach, da in der Auswertung 503 nur die Pulsbreite gemessen werden muß. Durch möglichst lange Pulse kann die Datensicherheit verbessert werden, da durch möglichst lange Pulse eine maximale Störunterdrückung (Filterung) möglich ist.

Durch die Erfindung genügt, zumindest im Prinzip, lediglich ein einziger Puls, um die Zusatzinformationen zu übertragen. Weiterhin zeichnet sich die Erfindung dadurch aus, daß nur wenige Flankenwechsel notwendig sind, was eine geringe Störabstrahlung des Signals $I_{DSxy}$ zur Folge hat.

Die Zusatzinformationen, die nur bei geringen Drehgeschwindigkeiten erforderlich sind (z.B. Einbaulage EL), sind langen Pulsen zugeordnet, während Zusatzinformationen, die bei maximaler Drehgeschwindigkeiten erforderlich sind (z.B. Luftspalt LS) durch kurze Pulse repräsentiert werden.

Durch das Vorschalten der Low-Zeitdauer $\Delta t$

kann auch bei hoher Frequenz (hoher Drehgeschwindigkeit) eine sichere Übertragung der Drehgeschwindigkeit gewährleistet werden.

Durch die Stillstandssignalübertragung etwa jede Sekunde und die zugehörige typische Pulsbreite ist eine Überwachung des Sensors und der Leitungen möglich.

Durch die Übertragung eines Einbaulagebits (EL) kann bei der Produktion am Bandende oder in der Werkstatt die Einbaulage des Drehzahlsensors überprüft werden.

**Patentansprüche**

1. Vorrichtung zur Erzeugung eines Signals ($I_{DSxy}$), wobei die Vorrichtung eine Einheit (1025) zur Erzeugung eines Signals aufweist, welches eine

   - erste Informationen enthält, die die Drehgeschwindigkeit eines rotierenden Teils repräsentieren, und
   - wenigstens zwei zweite Informationen (LS, DR, BBV, EL) enthält,

   wobei die Einheit (1025) das Signal derart erzeugt, dass es zeitlich zwischen einem ersten und einem zweitem Strom- und/oder Spannungsniveau (High/Low) wechselt, und

   - die ersten Informationen durch den zeitlichen Abstand zwischen einem gleichartigen Wechsel entweder zwischen dem ersten zu dem zweiten Niveau (High/Low-Flanke) oder einem gleichartigen Wechsel zwischen dem zweiten zu dem ersten Niveau (Low/High-Flanke) repräsentiert werden, und
   - die zweiten Informationen durch die zeitliche Länge entweder des ersten oder des zweiten Niveaus repräsentiert werden

   **dadurch gekennzeichnet, dass**
   die Einheit (1025) derart ausgestaltet ist, dass sie das Signal eine vorgebbare Zeitdauer auf das Strom- und/oder Spannungsniveau vor dem Wechsel einstellt.

2. Vorrichtung zur Erzeugung eines Signals ($I_{DSxy}$) nach Anspruch 1,
   **dadurch gekennzeichnet, dass**
   die Einheit (1025) derart ausgestaltet ist, dass sie mehrere zweite Informationen im Signal ($I_{DSxy}$) erzeugt, wobei jeder zweiten Information eine Pulsbreite zugeordnet wird und bei steigender Drehzahl des rotierenden Teils nur noch diejenigen zweiten Informationen im Signal ($I_{DSxy}$) erzeugt werden, deren Pulsbreite kürzer als die halbe Drehzahlperiode ist.

3. Vorrichtung nach einem der vorhergehenden Ansprüche, **dadurch gekennzeichnet, daß** die Vorrichtung bei einem Kraftfahrzeug Verwendung findet und die ersten Informationen die Drehzahl eines Fahrzeugrades, die Drehzahl eines als Benzin-, Diesel- und/oder Elektromotor ausgebildeten Fahrzeugmotors und/oder die Drehzahl einer mit dem Fahrzeuggetriebe wirkungsgekoppelten Welle repräsentiert und/oder die zweiten Informationen (LS, DR, BBV, EL) aus wenigstens einem Informationsanteil bestehen, die

   - den Abstand (LS) zwischen dem rotierenden Teil und einem die Drehgeschwindigkeit erfassenden Sensorelement und/oder
   - den Bremsbelagverschleiß (BBV) an wenigstens einer Fahrzeugradbremse und/oder
   - die Drehrichtung (DR) des rotierenden Teils und/oder
   - die Einbaulage (EL) eines die Drehgeschwindigkeit erfassenden Sensorelement

   repräsentieren.

4. Vorrichtung nach Anspruch 3, **dadurch gekennzeichnet, daß** Einheit (1025) derart ausgestaltet ist, dass die durch das von ihr erzeugte Signal ($I_{DSxy}$) zu übertragenden Informationsanteile unterschiedliche Prioritäten derart aufweisen, daß bei Vorliegen des Informationsanteils mit der höchsten Priorität die anderen Informationsanteile nicht übertragen werden.

5. Vorrichtung nach Anspruch 1, **dadurch gekennzeichnet, daß** die Einheit (1025) derart ausgestaltet ist, dass sie ein Triggersignal erzeugt, wobei in Reaktion auf die Erzeugung des Triggersignals das Signal auf das erste oder zweite Strom- und/oder Spannungsniveau (High/Low) gesetzt wird, wobei insbesondere vorgesehen ist, daß das Triggersignal abhängig von der Drehgeschwindigkeit des rotierenden Teils erzeugt wird.

6. Vorrichtung nach Anspruch 1, **dadurch gekennzeichnet, daß** die Einheit (1025) derart ausgestaltet ist, dass das Signal dann, wenn das rotierende Teil stillsteht, derart erzeugt, daß es das erste oder zweite Strom- und/oder Spannungsniveau (High/Low) eine vorgebbar feste Zeitdauer lang aufweist.

7. Vorrichtung mit einer Auswerteschaltung (5035) zur Auswertung eines nach Anspruch 1 oder 2 erzeugten Signals, **dadurch gekennzeichnet, daß** die Auswerteschaltung (5035) derart ausgestaltet ist, dass sie

   - eine die Drehgeschwindigkeit des rotierenden Teils repräsentierende Drehzahlgröße aus dem zeitlichen Abstand zwischen einem gleichartigen Wechsel entweder zwischen dem ersten zu dem zweiten Niveau (High/Low-Flanke) oder einem gleichartigen Wechsel zwischen dem zweiten zu dem ersten Niveau (Low/High-Flanke) ermittelt, und

- die Drehzahlgröße mit wenigstens einem Schwellenwert vergleicht, und

- die Auswertung der zeitlichen Länge entweder des ersten oder des zweiten Niveaus zur Ermittlung der zweiten Informationen abhängig von dem Vergleichsergebnis durchführt.

8. Vorrichtung mit einer Auswerteschaltung (5035) zur Auswertung des Signals nach Anspruch 7, **dadurch gekennzeichnet, daß** die Auswerteschaltung (5035) derart ausgestaltet ist, dass bei Vorliegen größerer Drehzahlgrößen nur noch Teile der zweiten Informationen auswertet.

9. Vorrichtung mit einer Auswerteschaltung (5035) zur Auswertung des Signals nach Anspruch 8 und 4, **dadurch gekennzeichnet, daß** die Auswerteschaltung (5035) derart ausgestaltet ist, dass die Informationsanteile mit der höchsten Priorität bis zu größeren Drehzahlgrößen hin auswertet wird als die Informationsanteile mit geringerer Priorität.

**Claims**

1. Apparatus for generating a signal ($I_{DSxy}$),
the apparatus having a unit (1025) for generating a signal which contains

   - first information items which represent the speed of rotation of a rotating part, and
   - at least two second information items (LS, DR, BBV, EL),

   the unit (1025) generating the signal in such a manner that it changes over time between a first and a second current and/or voltage level (high/low), and the first information items being represented by the temporal interval of an identical change from the first to the second level (high/low edge) or an identical change from the second to the first level (low/high edge), and the second information items being represented by the temporal length either of the first or of the second level,
   **characterized in that**
   the unit (1025) is configured in such a manner that it sets the signal to the current and/or voltage level before the change for a predefinable period of time.

2. Apparatus for generating a signal ($I_{DSxy}$) according to Claim 1,

**characterized in that**
the unit (1025) is configured in such a manner that it generates a plurality of second information items in the signal ($I_{DSxy}$), each second information item being assigned a pulse width and only those second information items in the signal ($I_{DSxy}$) whose pulse width is shorter than half the rotational speed period being generated as the rotational speed of the rotating part increases.

3. Apparatus according to one of the preceding claims, **characterized in that** the apparatus is used in a motor vehicle and the first information items represent the rotational speed of a vehicle wheel, the rotational speed of a vehicle engine which is in the form of a petrol engine, diesel engine and/or electric motor and/or the rotational speed of a shaft which is effectively coupled to the vehicle transmission and/or the second information items (LS, DR, BBV, EL) comprise at least one information part which represents

   - the distance (LS) between the rotating part and a sensor element which detects the speed of rotation and/or
   - the brake lining wear (BBV) on at least one vehicle wheel brake and/or
   - the direction of rotation (DR) of the rotating part and/or
   - the installation position (EL) of a sensor element which detects the speed of rotation.

4. Apparatus according to Claim 3, **characterized in that** the unit (1025) is configured in such a manner that the information parts to be transmitted using the signal ($I_{DSxy}$) generated by it have different priorities in such a manner that, when the information part having the highest priority is present, the other information parts are not transmitted.

5. Apparatus according to Claim 1, **characterized in that** the unit (1025) is configured in such a manner that it generates a trigger signal, the signal being set to the first or second current and/or voltage level (high/low) in response to the generation of the trigger signal, provision being made, in particular, for the trigger signal to be generated on the basis of the speed of rotation of the rotating part.

6. Apparatus according to Claim 1, **characterized in that** the unit (1025) is configured in such a manner that, when the rotating part is at a standstill, it generates the signal in such a manner that it is at the first or second current and/or voltage level (high/low) for a predefinably fixed period of time.

7. Apparatus having an evaluation circuit (5035) for evaluating a signal which is generated according to Claim 1 or 2, **characterized in that** the evaluation circuit (5035) is configured in such a manner that it

- determines a rotational speed variable, which represents the speed of rotation of the rotating part, from the temporal interval of an identical change from the first to the second level (high/low edge) or an identical change from the second to the first level (low/high edge), and
- compares the rotational speed variable with at least one threshold value, and
- evaluates the temporal length of either the first or the second level in order to determine the second information items on the basis of the comparison result.

8.  Apparatus having an evaluation circuit (5035) for evaluating the signal according to Claim 7, **characterized in that** the evaluation circuit (5035) is configured in such a manner that it evaluates only parts of the second information items when there are relatively large rotational speed variables.

9.  Apparatus having an evaluation circuit (5035) for evaluating the signal according to Claims 8 and 4, **characterized in that** the evaluation circuit (5035) is configured in such a manner that the information parts having the highest priority are evaluated up to larger rotational speed variables than the information parts having a lower priority.

**Revendications**

1.  Dispositif pour générer un signal ($I_{DSxy}$), selon lequel le dispositif comporte une unité (1025) pour générer un signal contenant :

    - une première information représentant la vitesse de rotation d'une pièce en rotation et
    - au moins deux secondes informations (LS, DR, BBV, EL),

    l'unité (1025) générant le signal pour alterner dans le temps entre un premier et un second niveau d'intensité et/ou de tension (haut/bas) et

    - les premières informations sont représentées par l'intervalle de temps compris entre une alternance analogue soit entre le premier vers le second niveau (flanc haut/bas) soit une alternance de même type entre le second et le premier niveau (flanc bas/haut) et
    - les secondes informations sont représentées par la durée soit du premier soit du second niveau,

    **caractérisé en ce que**
    l'unité (1025) est réalisée pour régler le signal pendant une durée pré-définie sur le niveau de courant et/ou de tension avant l'alternance.

2.  Dispositif pour générer un signal ($I_{DSxy}$) selon la revendication 1,
    **caractérisé en ce que**
    l'unité (1025) est réalisée pour générer plusieurs secondes informations dans le signal ($I_{DSxy}$) et à chaque seconde information est associée une largeur d'impulsion et en cas de vitesse de rotation croissante de la pièce en rotation, on génère seulement celle des secondes informations dans le signal ($I_{DSxy}$) dont la largeur d'impulsion est plus courte que la demi-période de vitesse de rotation.

3.  Dispositif selon l'une des revendications précédentes,
    **caractérisé en ce qu'**
    il est appliqué à un véhicule automobile et les premières informations sont la vitesse de rotation d'une roue du véhicule, la vitesse de rotation du moteur du véhicule qui est un moteur à essence, un moteur Diesel et/ou un moteur électrique et/ ou la vitesse de rotation d'un arbre coopérant avec la transmission du véhicule et/ou les secondes informations (LS, DR, BBV, EL) se composent d'au moins une composante d'information qui représente

    - la distance (LS) entre la pièce en rotation et un élément de capteur saisissant la vitesse de rotation et/ ou
    - l'usure de la garniture de frein (BBV) d'au moins un frein de roue du véhicule et/ ou
    - le sens de rotation (DR) de la pièce rotative et/ou
    - la position de montage (EL) d'un élément de capteur saisissant la vitesse de rotation.

4.  Dispositif selon la revendication 3,
    **caractérisé en ce que**
    l'unité (1025) est réalisée pour que le signal ($I_{DSxy}$) qu'elle génère pour les parties d'informations à transmettre, présente des priorités différentes de façon qu'en présence d'une partie d'information de priorité la plus élevée, les autres parties d'information ne sont pas transmise.

5.  Dispositif selon la revendication 1,
    **caractérisé en ce que**
    l'unité (1025) est réalisée pour générer un signal de déclenchement et en réaction à la génération du signal de déclenchement, le signal est mis au premier ou second niveau d'intensité et/ou de tension (haut/bas) et il est notamment prévu que le signal de déclenchement soit généré en fonction de la vitesse de rotation de la pièce rotative.

6.  Dispositif selon la revendication 1,

**caractérisé en ce que**

l'unité (1025) est réalisée pour que le signal soit généré de façon que si la pièce rotative est arrêtée, il présente pendant une durée fixe prédéfinie, le premier ou le second niveau d'intensité et/ou de tension (haut/bas).

7. Dispositif comportant un circuit d'exploitation (5035) pour exploiter un signal généré selon l'une des revendications 1 ou 2,

   **caractérisé en ce que**

   le circuit d'exploitation (5035) est réalisé pour

   - déterminer une grandeur de vitesse de rotation représentant la vitesse de rotation de la pièce rotative à partir de l'intervalle de temps compris entre une alternance de même nature soit entre le premier vers le second niveau (flanc haut/bas) soit une alternance de même nature à partir du second vers le premier niveau (flanc bas/haut) et
   - la grandeur de la vitesse de rotation est comparée à au moins un seuil et
   - l'exploitation de la durée soit du premier soit du second niveau pour déterminer les secondes informations est faite en fonction du résultat de la comparaison.

8. Dispositif comportant un circuit d'exploitation (5035) pour l'exploitation du signal selon la revendication 7,

   **caractérisé en ce que**

   le circuit d'exploitation (5035) est réalisé pour qu'en présence de plus grandes grandeurs de vitesses de rotation, seules des parties de la seconde information soient exploitées.

9. Dispositif comportant un circuit d'exploitation (5035) pour exploiter le signal selon les revendication 8 et 4,

   **caractérisé en ce que**

   le circuit d'exploitation (5035) est réalisé pour exploiter les parties d'information de plus grande priorité jusque vers les plus grandes vitesses de rotation plutôt que les parties d'information de moindre priorité.

## Fig. 1

Fig. 2

Status

$U_{Low} = R \cdot i_1$

$U_{High} = R \cdot (i_1 + i_2)$

High : kein BBV

Low : BBV

# Fig. 3a

# Fig. 3b

## Fig. 4a

## Fig. 4b

$U_B$

$U_{B1}$

$U_{B2}$

R

$t$/s

$U_{B1}$

$U_{B2}$

L

**Fig. 4c**

$t$/s

$U_{B1}$

R

$t$/s

$U_{B2}$

$t$/s

$\Delta U_B$

**Fig. 4d**

$t$/s

Fig. 5

$I_{DSxy}=$

$I_{High}= I1+I2$

or

$I_{low}$

502

1024a/b

Sensor mit Zusatzsignalen

DR

LS/EL

N/DF

BBV

1041

Sc

1025

1022 1023

I1

I2

S

$I_{DSxy}$

RM

503

Steuergerät

5035

Spannungsversorgung

Auswerteschaltung

5037

PWM-Auswertlogik

Datensignalübertragung

5038

Drehzahlsignal

5036

uC

EP 1 074 843 B1

# Fig. 6a

**Drehzahlsignal DF**

$I_2$

$I_1$

→ t

601

$I_{DSxy}$ **Übertragenes Signal:LS**

LR-Breite

602a

**Übertragenes Signal:DR-Linkslauf**

DR-L-Breite=2 * LR-Breite

603a

**Übertragenes Signal:DR-Rechtslauf**

DR-R-Breite=4 * LR-Breite

604a

**Übertragenes Signal:DR-Linkslauf&EL**

DR-L&EL-Breite=8 * LR-Breite    605a

**Übertragenes Signal:DR-Rechtslauf&EL**

$X_n$    $X_{n+1}$    $X_{n+2}$

606a    DR-R&EL-Breite=16 * LR-Breite

# Fig. 6b

**Drehzahlsignal DF**

601

602b

603b

604b

605b

606b

Vorbit-Low=LR-Breite

**Übertragenes Signal:LS**

LR-Breite

**Übertragenes Signal:DR-Linkslauf**

DR-L-Breite=2 * LR-Breite

**Übertragenes Signal:DR-Rechtslauf**

DR-R-Breite=4 * LR-Breite

**Übertragenes Signal:DR-Linkslauf&EL**

DR-L&EL-Breite=8 * LR-Breite

**Übertragenes Signal:DR-Rechtslauf&EL**

$X_n$  $X_{n+1}$  $X_{n+2}$

$\Delta t$

DR-R&EL-Breite=16 * LR-Breite

$\Delta t$

701a

**Drehzahlsignal DF**

Stillstandspuls=32 * LR

$I_{DSxy}$ **Übertragenes Signal**

t=1 Sekunde

702a

## Fig.7a

701b

**Drehzahlsignal bei sich erhöhender Geschwindigkeit DF**

$I_{DSxy}$ | Übertragenes | Signal

702b

Pulsbreite kürzer als halbe

Pulsbreite länger als halbe

Drehzahlperiodenlänge     A   Drehzahlperiodenlänge

## Fig.7b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 2606012 C2
- US 4076330 A
- DE 4322440 C
- DE 3201811 A
- DE 3510651 A
- DE 19609062
- DE 19838433 A1
- WO 8809026 A
- DE 19634715 A1

### In der Beschreibung aufgeführte Nicht-Patentliteratur

- Integrierte Hall-Effekt-Sensoren zur Positions- und Drehzahlerkennung. *elektronik industrie,* Juli 1995, 29-31
- Neue, alternative Lösungen für Drehzahlsensoren im Kraftfahrzeug auf magnetoresisitiver Basis. *VDI-Berichte Nr.509,* 1984